# EUROPEAN PATENT SPECIFICATION

(11) **EP 3 608 090 B1**
(45) Date of publication and mention of the grant of the patent: **02.08.2023**
(21) Application number: 18275118.0
(22) Date of filing: 10.08.2018
(51) Int. Cl.: B29C 70/32, B29C 70/86, B29C 70/22, F16L 27/12, F16L 47/14, B29L 23/00

(54) **COMPOSITE CONNECTOR AND METHOD OF MANUFACTURING THE SAME**
VERBUNDVERBINDER UND VERFAHREN ZUR HERSTELLUNG DAVON
CONNECTEUR COMPOSITE ET SON PROCÉDÉ DE FABRICATION

(43) Date of publication of application: 12.02.2020
(73) Proprietor: Crompton Technology Group Limited, Solihul, West Midlands B90 4SS (GB)
(72) Inventor: POLLITT, Will, Banbury, Oxfordshire OX16 4XD (GB); TURNER-CLEAVER, Daniel, Banbury, Oxfordshire OX16 4XD (GB)
(74) Representative: Dehns

(56) References cited:
- GB-A- 2 082 730

## Description

### Technical Field

The present disclosure relates to composite (e.g. fibre-reinforced polymer) connectors e.g. for connecting fluid transfer conduits to other structures, and to methods of manufacturing composite (e.g. fibre-reinforced polymer) connectors for fluid transfer conduits.

### Background

Fluid transfer conduits (e.g. fuel pipes) are typically connected to other fixed structures (e.g. inside aeroplane wings) using one or more connectors. To allow for movement of the fixed structure without inducing large stresses on the fluid transfer conduit itself (e.g. as a wing flexes during flight), such connectors are designed to tolerate a small amount of relative movement between the fluid transfer conduit and the structure whilst still effectively supporting the conduit and sealing the connection. This is often achieved using an elastomeric O-ring, on which the fluid transfer conduit "floats", to seal the connection while allowing a small amount of relative motion.

In many applications, such connectors are required to withstand large circumferential loads (e.g. due to high internal pressures in a fluid transfer conduit) as well as other stresses. To provide the requisite strength while minimising part count, connectors are conventionally machined from a single block of metal (usually aluminium). However, this process results in a large amount of material being wasted (i.e. a very high so-called buy-to-fly ratio).

Furthermore, fluid transfer conduits are increasingly being constructed from composite materials (e.g. fibre-reinforced polymers), in order to save weight. However, when used with metallic connectors, composite fluid transfer conduits can experience various problems such as galvanic corrosion and a reduced temperature operating window due to unequal thermal expansion.

More recently, therefore, an alternative manufacturing technique has been developed whereby composite connectors are produced by injection moulding a thermoplastic matrix reinforced with randomly oriented chopped fibres (e.g. carbon/glass/aramid fibres). Because injection moulding is an additive process, it results in less wasted material during manufacture than conventional metal machining techniques. In addition, chopped-fibre reinforced composite parts are typically lighter than their metal equivalents. However, chopped-fibre reinforcement does not exploit fully the potential strength of reinforcing fibres.

GB 2,082,730 discloses a flexible coupling for transmitting torque and accommodating angular misalignment between drive and driven shafts, which includes at least one reinforcing ring disposed between a pair of hubs or plates having anchoring means, wherein an elongated fiber strand coated or impregnated with a flexible matrix is wrapped from the hub or plate on one side of the reinforcing ring(s), to and across the reinforcing ring(s) and then to the hub or plate on the opposite side of the reinforcing ring(s) following a geodesic path.

### Summary

According to one aspect of the present disclosure, there is provided a composite connector for a fluid transfer conduit according to claim 8.

Because of the high strength-to-weight ratio of continuous fibre-reinforced polymer, the use of continuous circumferentially-oriented fibre reinforcement in the hub portion can produce a significantly stronger part using the same amount of material compared to randomly-oriented fibre reinforcement or entirely metal parts. Correspondingly, an equally strong part may be produced using less material, thus saving weight.

The composite connector according to the present disclosure may be produced using additive processes. This means that there is little material wasted during manufacture, especially compared to machining techniques used to construct conventional metal components. As a result, the cost of manufacturing a composite connector according to the present disclosure may be less than for an equivalent metal component, even if the underlying material costs are higher (due to less material going to waste).

When continuous fibre reinforcement is used to make a given component, the orientation of the continuous fibres can be tailored to the direction in which the resulting component will experience loads. Many fibres may be oriented in a primary direction of loading, and a lower proportion of fibres may therefore be oriented in directions in which the component experiences little load. This minimises the amount of material wasted when producing a part with a given load capacity.

In this case, the continuous circumferentially-oriented fibre reinforcement in the hub portion provides increased hoop (circumferential) strength, improving the connector's resistance to high radial loads (e.g. due to high pressure fluid within a fluid transfer conduit connected to the hub portion). The angle(s) of the continuous circumferentially-oriented fibre reinforcement may be chosen to control the strength properties, for example some layers of high-angle hoop fibre and other layers of lower-angle helical fibre to help tolerate in-service axial loads.

When using randomly-oriented fibre reinforcement, no such tailoring can be performed, and as such the amount of material required to provide the required load resistance is increased. In addition, even when oriented in the direction of loading, chopped fibres inherently exhibit much lower tensile strength than the equivalent amount of continuous fibres. US 2016/0273696 describes an example of a composite part injection-moulded from a thermoplastic matrix reinforced by chopped fibres.

As mentioned above, the composite connector of the present disclosure may be produced using less material than conventional metal connectors, reducing component weight. In many applications, such as the aerospace industry, any weight saving is highly advantageous as it can lead to significant fuel (and thus cost) savings over the lifetime of a part.

It will be appreciated that in a composite connector according to the present disclosure, the flange portion comprises continuous fibre reinforcement. As compared to discontinuous e.g. chopped fibre reinforcement, this means that the layup of the continuous fibre reinforcement can provide the flange portion with non-isotropic properties. In particular, the continuous fibre reinforcement may extend in one or more directions that are chosen to provide strength in a direction that it is expected the flange portion will experience load.

In at least some examples, the continuous fibre reinforcement in the flange portion extends in a radial direction to reach an outer circumferential edge of the flange portion. This may be more easily achieved, for example, when the connector is manufactured using a filament winding process, by the presence of the encapsulated core. The encapsulation of the core allows for the continuous fibre reinforcement to be wound over the surface of the flange portion that is substantially perpendicular to the hub portion so as to reach the outer circumferential edge of the flange portion (and potentially pass over the edge).

In at least some examples, in addition or alternatively, the continuous fibre reinforcement in the flange portion extends in a circumferential direction. In one or more examples, the continuous fibre reinforcement in the flange portion extends in multiple orientations (e.g. circumferential, radial, or other intermediate orientations). The layup of the continuous fibre reinforcement can be tailored to the loads expected during service.

It will be appreciated that the core is encapsulated in the flange portion by the same thermosetting polymer reinforced with the continuous fibre reinforcement. For ease and reduced cost of manufacturing, it is preferable that the continuous fibre reinforcement is wound in a single process to form both the hub portion and the flange portion. For example, the connector may be manufactured by winding continuous fibre reinforcement, impregnated with the thermosetting polymer, around a mandrel to form the tubular hub portion and over a former to form the flange portion. Thus, in at least some examples, the continuous fibre reinforcement runs continuously from the hub portion into the flange portion. The fibre reinforcement which runs continuously from the hub portion into the flange portion confers strength to the connector at the point at which the hub portion is connected to the flange portion. This increases the ability of the connector to resist bending loads (e.g. due to wing flex and inertial loads during flight) and mitigates the chances of damage or failures in a potential region of high stress. In particular, as the continuous fibre reinforcement extends across the intersection of the hub and the flange, i.e. from the hub portion, round the corner into the flange portion, the connector benefits from increased axial load strength. Once the connector is wound, cured and optionally machined, there are no further assembly or jointing processes required. Joints and assembly processes typically add a significant amount of time/cost to the final part and are generally expected to have the highest likelihood of failure in operation.

The flange portion comprises at least one fixing point (e.g. a through-hole). Such fixing point(s) may be used along with a suitable fastening means (e.g. a nut and bolt) to secure the connector to a structure. The fixing point may be formed by drilling through the composite connector in a post-production step, but this results in constituent fibres of the continuous fibre reinforcement being severed, which can reduce the strength of the flange portion and thus the efficacy of the connector. In some examples, therefore, the continuous fibre reinforcement is arranged to divert around the fixing point(s). For example, the flange portion may comprise at least one through-hole surrounded by unbroken continuous fibre reinforcement.

In one or more examples, the flange portion comprises at least one fixing point and the continuous fibre reinforcement is arranged in a pattern around the fixing point, e.g. such that the continuous fibre reinforcement strengthens the fixing point. Conveniently, the continuous fibre reinforcement serves to assist in transmission of load between adjacent fixing points. In at least some examples, preferably the continuous fibre reinforcement at least partially encircles the fixing point(s). In some examples, the continuous fibre reinforcement may be arranged to encircle an adjacent pair of fixing points, e.g. at least 10 times. An opening may be formed at each fixing point to enable the attachment of a fastener to the flange portion at the fixing point. Where the continuous fibre reinforcement passes around a fixing point, it may result in the formation of a hub of increased thickness. This may strengthen the fixing point(s).

In some examples, the thermosetting polymer is chosen from epoxy or phenolic resins. Thermosetting polymers provide high strength, are easy to work with and can be less expensive than thermoplastic polymers.

The polymer may optionally include one or more non-fibre material additives. For example, the polymer may include small quantities of one or more non-fibre material additives intended to alter one or more non-structural properties of the polymer, such as viscosity, thermal or electrical conductivity, radiation sensitivity, colour, fire or chemical resistance etc.

For example, in aircraft fuel systems, it is important to control the conductivity of the composite connector. Ideally the fuel system (i.e. comprising pipes and connectors) is insulating enough to avoid becoming the preferred path for lighting conduction, whilst conductive enough to avoid static build-up due to fuel flow. Adding a particular amount of a conductive additive (e.g. carbon black, carbon nanotubes or graphene) to the polymer during manufacture allows the desired level of conductivity to be achieved. Such an additive is ideally present throughout the component (i.e. in both the flange portion and the hub portion).

To control the conductivity of a fuel system, it may not be necessary to control the conductivity of both the pipe(s) and the connector(s). It may be sufficient, in at least some cases, for the conductivity of only the pipe(s) to be controlled (e.g. by adding a certain concentration of carbon black during pipe manufacture). The connector then simply needs to comprise a minimum level of conductivity for the desired overall conductivity to be achieved. Alternatively, the conductivity of the connector(s) may be controlled and used with a pipe with a minimum conductivity.

In addition to the weight savings provided by the present disclosure, the use of continuous circumferentially-oriented fibre reinforcement within the hub portion of the connector confers other benefits. The continuous circumferential fibre reinforcement stiffens the hub portion and increases its hoop strength (i.e. resistance to radial forces). When fluid at high pressure is passed through the fluid transfer conduit, this stiffness and strength mitigates radial expansion of the composite connector when subject to internal pressures, ensuring that a good connection and seal is made at all times.

"Continuous" fibre reinforcement is used herein to refer to fibre reinforcement in which at least some individual constituent filaments have a substantial length, i.e. they are not short "chopped fibres" or discontinuous fibres. In at least some examples, the fibre reinforcement may be considered to be "continuous" when the fibres or filaments have a length on the same scale as the part they are reinforcing. This means that the fibre reinforcement is substantially "continuous" when it extends uninterrupted across a given dimension of a part, such as a length, radius or circumference.

The continuous circumferentially-oriented fibre reinforcement in the hub portion preferably comprises at least some individual constituent filaments which extend entirely around the circumference of the hub portion, e.g. extending up to 360° around the central axis, and even further preferably make several complete loops around the central axis of the hub portion. Predominantly hoop-wound continuous fibre reinforcement in the hub portion is beneficial for absorbing radial forces.

The strength of fibre-reinforced polymers lies in the tensile strength of the reinforcing fibres and as such, an uninterrupted length of continuous fibre wrapping around the hub portion provides a significant improvement in hoop strength and thus pressure resistance when compared to the same amount of chopped fibres, even if all of the chopped fibres were to be aligned in the direction of loading.

In those examples wherein the continuous fibre reinforcement runs continuously from the hub portion into the flange portion, some of the individual constituent filaments may travel back and forth between the hub portion and the flange portion several times. As the fibres run between the hub portion and the flange portion, their angle relative to the central axis may change. To help reduce the risk of 'bridging' between the hub portion and the flange portion, where the continuous fibre reinforcement tends to run diagonally between the hub portion and the flange portion with an air gap, additional layers of continuous circumferentially-oriented fibre reinforcement may be applied to the hub portion at least in an area adjacent to the flange portion to create a transition portion e.g. providing a ramp between the hub portion and the flange portion. This may result in a transition portion that is thicker than the rest of the hub portion. Such additional layers in the transition portion can provide a surface area to help ramp the continuous fibre reinforcement from the hub portion to the flange portion e.g. such ramping making it easier for the continuous fibre reinforcement to pass from an axial mandrel to a perpendicular former during manufacture using a filament winding process.

In these and other examples, the connector may comprise a transition portion that extends between the hub portion and the flange portion at an increasing angle θ to the central axis, wherein 0 < θ < 90° to the central axis. The angle θ may be gradually increasing across the transition portion from the hub portion to the flange portion. Such a transition portion may reduce stress on the fibre reinforcement running continuously from the hub portion into the flange portion, as it reduces the severity of the change in angle experienced by the fibre. As mentioned above, the transition portion may be formed by additional layers of continuous circumferentially-oriented fibre reinforcement applied to this part of the hub portion.

In addition, when the connector is used to connect a fluid transfer conduit to a component featuring a surface normal to the fluid transfer conduit, the transition portion may provide a location for an O-ring to be disposed, improving the efficacy of a seal between the fluid transfer conduit and the component.

As mentioned above, an elastomeric O-ring may be used to seal a connection between the connector and a fluid transfer conduit. In such cases the O-ring may be positioned between an outer surface of the fluid transfer conduit and an inner surface of the hub portion (or, conversely, between an inner surface of the conduit and an outer surface of the hub portion), to seal the connection. Optionally, the elastomeric O-ring is seated between a pair of retaining ridges that allow for axial movement between the fluid transfer conduit and the hub portion. The strong and stiff hub portion keeps the O-ring tightly pressed radially between the inner (or outer) surface of the hub portion and the outer (or inner) surface of the fluid transfer conduit, ensuring the integrity of the seal.

In addition to the strength benefits, utilising continuous circumferentially-oriented fibre reinforcement in the hub portion also enables the coefficient of thermal expansion (i.e. the "hoop" CTE) of the hub portion to be closely matched to that of a fluid transfer conduit to which it may be connected.

Fluid transfer conduits for which the connector of the present disclosure is particularly suitable are composite parts manufactured from fibre-reinforced polymers comprising a high proportion of continuous circumferentially-oriented fibres. This maximises the hoop strength and thus the internal pressure tolerance of the conduit, something which is particularly important in high pressure systems such as fuel pipes, while minimising weight. Because of the high proportion of circumferential fibre in such composite conduits, when the fluid transfer conduit is subject to a change in temperature (e.g. due to changing ambient conditions), the radial expansion is dominated by the expansion of the fibre reinforcement. Fibres used as reinforcement in such materials typically have a very low CTE compared to the polymer matrix. For example, glass fibres have a CTE of around 1.6-2.9 × 10⁻⁶ K⁻¹ and carbon fibres have a CTE which is very close to zero (and may even be negative, e.g. roughly -0.5 × 10⁻⁶ K⁻¹), while a typical polymer resin has a CTE of ~ 50 × 10⁻⁶ K⁻¹ (for comparison, aluminium has a CTE of ~ 23 × 10⁻⁶ K⁻¹). As a result, the circumferential (hoop) thermal expansion of a fibre-reinforced polymer conduit with continuous circumferential fibre is usually low.

Injection-moulded, randomly-oriented chopped fibre-reinforced composites, in comparison, have a hoop CTE which is dominated by the CTE of the resin matrix - i.e. much higher than that of the fibre-reinforced polymer (FRP) conduits described above. Metal connectors also suffer relatively high thermal expansion.

Conventional connectors therefore, when used with fibre-reinforced polymer conduits, can only be used within a small temperature operating envelope. Differential expansion of the connector and the conduit when subject to temperatures outside this envelope can risk the integrity of the seal and/or the entire connection. Or, the requirement to accommodate such temperature variations and differing CTEs puts design constraints on other elements such as the O-ring. A similar issue arises when a connector has a different stiffness to that of a conduit.

However, as mentioned above, because the hub portion in examples of the present disclosure comprises continuous circumferentially-oriented fibre reinforcement, its hoop CTE (and its stiffness) can be more closely matched to that of a given fluid transfer conduit. Matching the CTE allows relative expansion (of the connector relative to the conduit) during use to be minimised over a wider range of temperatures, increasing the applicability and reliability of the part. In some examples, therefore, the composition and orientation of the continuous circumferentially-oriented fibre reinforcement within the hub portion is selected such that the CTE (i.e. the hoop CTE) of the hub portion matches that of a fluid transfer conduit, formed from FRP, which is connected to the hub portion in use. Additionally or alternatively, the composition and orientation of the fibre reinforcement within the hub portion is selected such that the stiffness of the hub portion substantially matches that of the fluid transfer conduit.

The hub portion is preferably arranged to fit onto or into a fluid transfer conduit, e.g. concentric therewith, with a conduit fitting over an outer diameter of the hub portion or inside an inner diameter of the hub portion. The flange portion is preferably arranged to attach to a further structure and may comprise one or more attachment points thereto.

There is further disclosed a connection system comprising a composite connector as disclosed herein and a fibre-reinforced polymer fluid transfer conduit connected to the hub portion. In one or more examples, the composition and orientation of the continuous circumferentially-oriented fibre reinforcement within the hub portion is selected such that the CTE (i.e. the hoop CTE) of the hub portion substantially matches that of the fluid transfer conduit. Additionally or alternatively, the composition and orientation of the fibre reinforcement within the hub portion is selected such that the stiffness of the hub portion substantially matches that of the fluid transfer conduit.

In one or more examples, such matching may be achieved by matching the composition and angle of the continuous circumferentially-oriented fibre reinforcement within the hub portion to the composition and angle of continuous circumferentially-oriented reinforcing fibre within the FRP conduit. The continuous circumferentially-oriented fibre reinforcement in the hub portion may therefore have substantially the same fibre angle as the continuous circumferentially-oriented fibre reinforcement in the conduit. In some examples these fibre angles may differ by no more than 15°, no more than 10°, and, preferably, by no more than 5°.

In the hub portion, the continuous circumferentially-oriented (hoop) fibre reinforcement typically makes an angle of more than 60° to the central axis. In preferred examples the continuous circumferentially-oriented fibre reinforcement extends at an angle of more than 80° to the central axis, e.g. at least 85°, or even at or close to 90°. A high angle maximises the hoop strength provided by the continuous circumferentially-oriented fibre reinforcement. In various examples, the hub portion is predominantly hoop-wound, i.e. comprising multiple layers of continuous circumferentially-oriented fibre reinforcement extending at an angle of more than 80° to the central axis. In various examples, the continuous circumferentially-oriented fibre reinforcement within the hub portion may comprise layers of high-angle hoop fibre reinforcement and layers of lower angle helical fibre reinforcement, to help tolerate in-service axial forces.

In some examples the hub portion comprises a mixture of layers of continuous longitudinal or helical fibre reinforcement and the continuous circumferentially-oriented fibre reinforcement, e.g. alternating layers of continuous longitudinal and continuous circumferential fibre reinforcement. This provides the hub portion with uniform strength and mitigates delamination during use. Mixing layers of continuous fibre reinforcement with different orientations may also prevent large residual stresses being produced during manufacture, which can severely weaken the connector.

It will therefore be appreciated that the hub portion may comprise additional continuous fibre reinforcement oriented at a variety of angles. In some examples, the hub portion further comprises longitudinal or axially-oriented continuous fibre reinforcement (i.e. fibre reinforcement which is oriented substantially parallel to the central axis, e.g. close to 0°), which may increase the resistance of the hub portion to bending loads. Additionally or alternatively, the hub portion may comprise helical continuous fibre reinforcement oriented at roughly 45° to the central axis (i.e. midway between the axial and circumferential directions). This can help with CTE matching and/or may aid the detection of barely-visible impact damage (BVID) to the hub portion.

The hub portion preferably comprises a tube with a substantially circular cross-section (i.e. the hub portion comprises a cylinder). A circular cross-section maximises the hoop strength of the hub portion and can be easier to manufacture. In some examples, however, the tube may have a rectangular, other polygonal or an elliptical cross-section, amongst other possible shapes. Preferably the hub portion has a cross-section which matches that of a fluid transfer conduit to which it is suitable for connecting. In a connection system as disclosed above, the hub portion may have substantially the same cross-section as the fluid transfer conduit.

According to another aspect of the present disclosure, there is provided a method of manufacturing a composite (e.g. fibre-reinforced polymer) connector for a fluid transfer conduit according to claim 1.

Passing the continuous fibre reinforcement across the first and second surfaces of the former means that fibres can run at any angle across the first surface and are not limited by the requirement for turns, as when winding only over one surface of a former. Using the winding process to form both the hub and flange portions means that no further assembly or jointing steps may be required after the connector part has been wound (and, optionally, cured). Joints and assembly processes typically add a significant amount of time and/or cost to the final connector, and can generally be seen as the product area with the highest likelihood of failure in operation.

In one or more examples, passing the continuous fibre reinforcement across the first surface of the former comprises passing across the first surface in a radial direction to pass over an edge of the first surface before passing across the second surface. This means that the second surface can be used to allow for turns during the winding process. As a result, the continuous fibre reinforcement in the flange portion can extend in a radial direction to reach all the way out to an outer circumferential edge of the flange portion. In some examples, to achieve the desired wind angle or laminate layup, the continuous fibre reinforcement may be wound back onto the mandrel on either side of the former.

In one or more examples, passing the continuous fibre reinforcement across the first surface of the former comprises passing across the first surface in a circumferential direction. This may be in addition to any radially extending continuous fibre reinforcement. In one or more examples, passing the continuous fibre reinforcement across the first surface of the former comprises passing across the first surface in multiple orientations. It will be appreciated that the wind angles over the first surface may be varied to account for torsional and axial loads acting on the flange portion in operation. Multi-axis winding control can allow for fibre to be wound at a variety of angles and positions to achieve this.

In one or more examples, the method further comprises: applying a consolidation force to the flange portion in a direction substantially parallel to the central axis. Applying a consolidation force to consolidate the wound composite material of the flange portion helps to remove voids which may adversely affect the strength of the connector. Consolidating the flange portion may reduce the risk of the flange portion having inconsistent strength properties. Consolidation may also help to improve the surface finish of the flange portion in the connector. This may reduce or eliminate the need for additional machining and/or sealing processes. The consolidation force may be applied in two opposing directions, either side of the former. Suitable consolidation forces may be achieved, for example, through conventional shrink tape wrapping methods, or vacuum bagging, or the application of compression plates.

As a result of the disclosed manufacturing method, the former is encapsulated as a core for the flange portion. The core is held captive in the flange portion at the end of the winding process. Preferably the core is non-structural, that is, not intended to contribute to the strength properties of the connector. The former may be made of a lightweight material, such as a foam or polymer material, for example glass-filled epoxy. The core may be left in the flange portion or removed in a subsequent manufacturing step. In one or more examples, the method further comprises: removing the tubular mandrel and leaving the former encapsulated as a core for the flange portion. In such examples the former is preferably fitted onto the mandrel in a removable manner, rather than being fixed to the tubular mandrel, so the mandrel can be slid out easily or otherwise removed without disturbing the captive core. In one or more other examples, the method further comprises: removing the tubular mandrel and removing the former. In such examples, the mandrel and/or former may be destroyed during the removal process, for example the mandrel and/or former could be dissolvable or melted out. In such examples the former and/or mandrel may be made of a sacrificial material.

The winding step is preferably a filament winding process. In some examples, the continuous fibre reinforcement may be pre-impregnated with the thermosetting polymer (e.g. the continuous fibre reinforcement may take the form of pre-preg tow). In some other examples, the continuous fibre reinforcement may be impregnated with the thermosetting polymer during winding, for example by passing the fibre reinforcement through a polymer bath as part of the winding process (so-called "wet wound"). In some other examples, the continuous fibre reinforcement may be impregnated with the thermosetting polymer after winding, for example by winding dry fibre reinforcement and then vacuum infusing after winding with the thermosetting polymer.

In one or more examples, the method further comprises: curing the hub portion and the flange portion. It will be appreciated that a filament winding process followed by curing can result in an integrated connector part, i.e. with the continuous fibre reinforcement running continuously from the hub portion into the flange portion, without requiring the time and/or expense of multiple manufacturing steps. As mentioned above, once the part is wound and cured (and optionally machined e.g. to remove excess composite material or create additional features), there may be no further assembly or jointing steps.

In at least some examples, the method may further comprise machining the flange portion to provide at least one fixing point. This may be simpler than accommodating fixing point(s) during the winding process. In at least some other examples, the method may comprise forming at least one fixing point for the flange portion by arranging the continuous fibre reinforcement in a pattern around the fixing point, e.g. such that the continuous fibre reinforcement strengthens the fixing point. In at least some examples, preferably the continuous fibre reinforcement is arranged to at least partially encircle the fixing point(s). In at least some such examples, the former may comprise at least one protruding boss corresponding to a fixing point.

In various examples according to the present disclosure, the continuous fibre reinforcement may comprise any suitable fibre material. For example, the continuous fibre reinforcement may consist of one or more of glass, carbon or synthetic (e.g. aramid) fibres. Glass fibre reinforcement may be preferred for connectors intended to be used with fluid transfer conduits (e.g. fuel pipes) made of glass fibre reinforced composite.

The present disclosure refers throughout to a composite connector comprising a hub portion and a flange portion. It will be appreciated that a given connector may comprise more than one flange portion per hub portion, or more than one hub portion per flange portion. Any single-ended, double-ended or multiple port connector is included within this disclosure.

Features of any example described herein may, wherever appropriate, be applied to any other example described herein. Where reference is made to different examples or sets of examples, it should be understood that these are not necessarily distinct but may overlap.

### Detailed Description

Certain examples of the present disclosure will now be described with reference to the accompanying drawings in which:
Figure 1 is a cross sectional view of the connection between a connector and a fluid transfer conduit;
Figures 2A and 2B show schematic perspective views of composite connectors for a fluid transfer conduit according to examples of the present disclosure;
Figure 3 illustrates an example of a single connector winding process;
Figure 4 illustrates an example of a double connector winding process; and
Figs. 5A to 5C schematically illustrate the different orientations of continuous fibre reinforcement resulting from such winding processes.

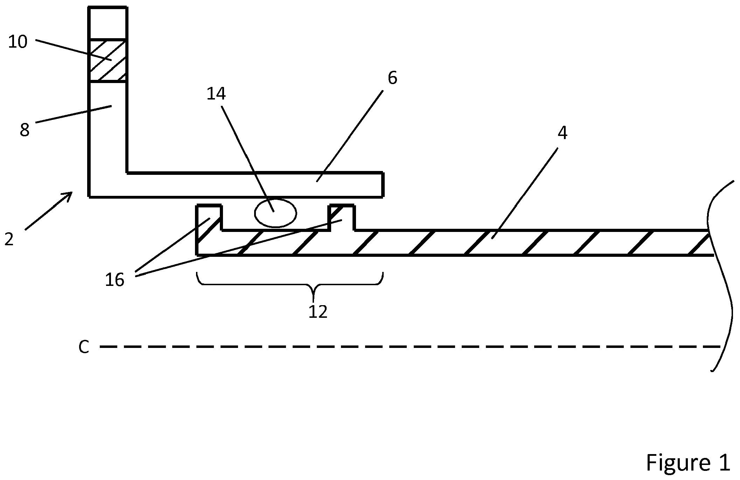

Figure 1 shows the interface between a connector 2 and a cylindrical fluid transfer conduit 4 that extends parallel to a central axis C. The connector 2 comprises a cylindrical hub portion 6, which also extends parallel to the central axis C, and a flange portion 8, which extends from an end of the hub portion 6 in a direction perpendicular to the central axis C. The flange portion 8 further comprises a through-hole 10, by which the connector 2 may be secured to another structure, e.g. an aircraft wing.

The hub portion 6 encloses a connection portion 12 of the fluid transfer conduit 4. An elastomeric O-ring 14 is located between the hub portion 6 and the connection portion 12, retained between an inner wall of the hub portion 6 and an outer wall of the fluid transfer conduit 4. The O-ring 14 is confined by two retaining ridges 16 which extend radially outwards from the connection portion 10 of the fluid transfer conduit 4.

The O-ring 14 provides a seal between the connector 2 and the conduit 4, such that fluid may flow along the conduit 4 and into the connector 2 without escaping. In addition, the configuration of O-ring 14 between the connection portion 12 and the hub portion 6 allows the fluid transfer conduit 4 to move a small distance in the direction of the central axis C relative to the connector 2 without compromising the seal. This enables a structure to which the connector 2 is secured to move or flex a small amount without imparting large stresses on the conduit 4 (as would be the case if the connector 2 was rigidly attached to the conduit 4). Instead, the conduit 4 "floats" on the O-ring 14 such that it can slide longitudinally a small distance without breaking the seal. For example, the structure to which the connector 2 is attached may be an aircraft wing spar, which is designed to move a small amount during flight as the wing flexes due to aerodynamic load and/or temperature fluctuations. The fluid transfer conduit 4 may comprise a fuel pipe located within the wing which must therefore be able to cope with the wing flex during flight.

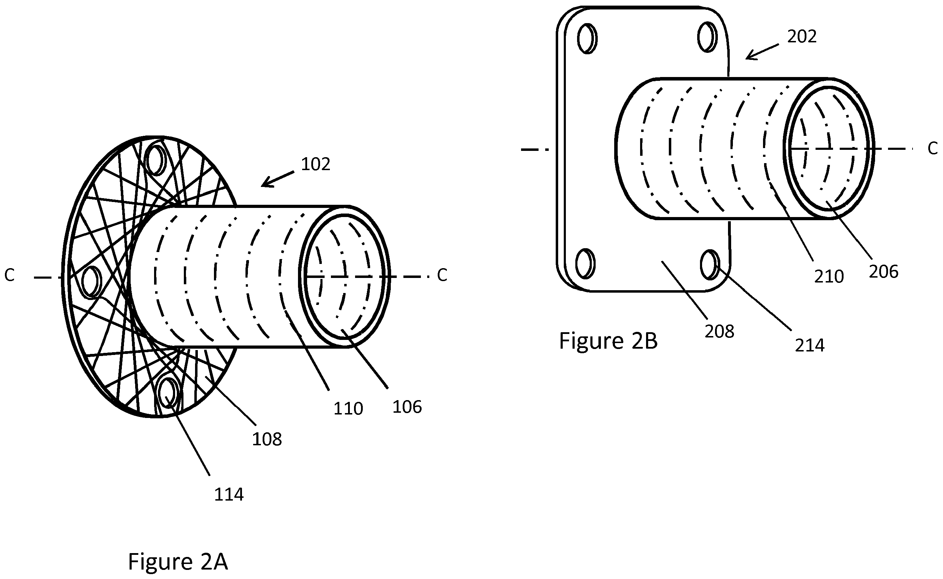

Figures 2A and 2B are schematic perspective views of composite connectors 102, 202 according to examples of the present disclosure. The connectors 102, 202 each comprise a cylindrical hub portion 106, 206 which extends parallel to a central axis C, and a flange portion 108, 208 which extends perpendicular to the central axis C from an end of the hub portion 106, 206. Through-holes 114, 214 are formed in the flange portions 108, 208. The flange portions 108, 208 have different shapes in Figures 2A and 2B.

Each hub portion 106, 206 comprises a thermosetting polymer resin matrix reinforced with continuous hoop-wound (i.e. circumferentially-orientated) fibre reinforcement 110, 210. The hoop-wound fibre reinforcement 110, 210 provides each hub portion 106, 206 with high hoop strength such that the hub portions 106, 206 can resist large internal pressures. It also makes the hub portions 106, 206 very stiff, such that large internal pressures cause negligible radial expansion.

As shown in Figure 2A, the flange portion 108 comprises the same thermosetting polymer resin matrix with the continuous fibre reinforcement 110 extending from the hub portion 106 into the flange portion 108. The continuous fibre reinforcement 110 in the flange portion 108 is wound at varying angles, resulting in a mixture of radial and circumferential fibre directions, to give the required structural strength.

Although not shown in Figure 2B, the continuous fibre reinforcement 210 also extends from the hub portion 206 into the flange portion 208 of the composite connector 202, the continuous fibre reinforcement 210 being hoop-wound (i.e. circumferentially-orientated) in the hub portion 206 and oriented at various radial and/or circumferential angles in the flange portion 208.

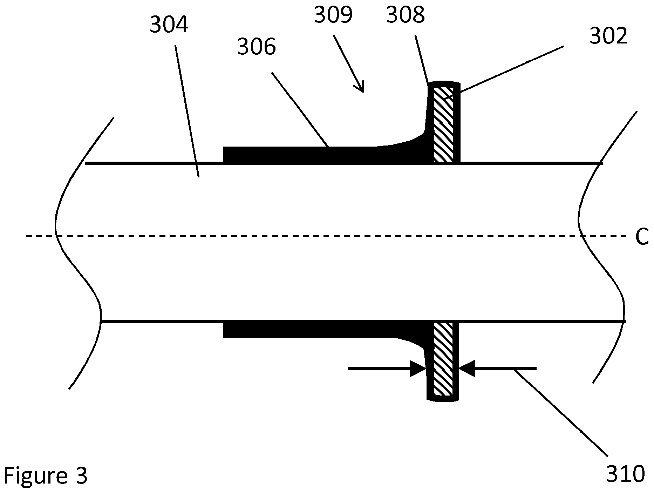

A single winding process for manufacturing a composite connector according to one example of the present disclosure will now be described with reference to Figure 3.

An annular lightweight former 302 is fitted around a cylindrical mandrel 304 which extends substantially parallel to a central axis C. Using conventional filament winding techniques, continuous fibre reinforcement is wound onto the mandrel 304 and around the former 302 to form a tubular hub portion 306 and a flange portion 308 in which the former 302 is encapsulated. The former 302 thus acts as a core of the flange portion 308.

The continuous fibre reinforcement 306 may be pre-impregnated with a thermosetting polymer resin ("pre-preg"), or may be passed through a bath of thermosetting polymer resin (not shown) just prior to being wound onto the mandrel 304 ("wet wound"), or may be wound dry and subsequently vacuum infused with a thermosetting polymer resin after winding.

Once a sufficient quantity of continuous fibre reinforcement has been applied to the mandrel 304 and former 302 (e.g. when the former 302 is fully encapsulated), the hub and flange portions 306, 308 are then cured to form an integrated composite connector 309. During and/or after the curing process, an axial compressive consolidation force 310 may be applied to the flange portion 308, to consolidate the composite material in the flange portion 308 and eliminate any voids that may have formed during the winding process.

Once the curing process is complete, the connector 309 is extracted from the mandrel 304. Although not shown in Figure 3, the connector 309 may then undergo one or more machining steps, for example to remove excess material and/or to form additional features as required.

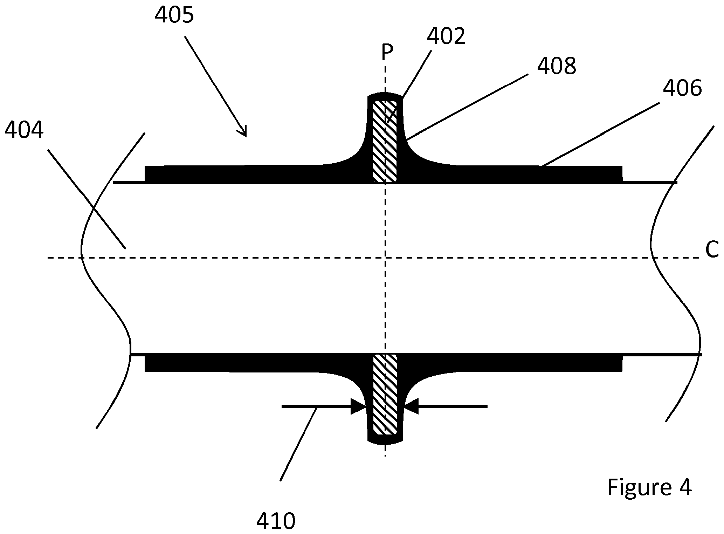

An alternative, double wind process for manufacturing a composite connector according to one example of the present disclosure will now be described with reference to Figure 4.

An annular sacrificial former 402 is fitted around a cylindrical mandrel 404 which extends substantially parallel to a central axis C. Using conventional filament winding techniques, continuous fibre reinforcement is wound onto the mandrel 404 on both sides of the former 404 and around and over the former 402 to form a tubular structure 405 comprising two tubular hub portions 406 extending from either side of a central flange-forming portion 408, in which the former 402 is encapsulated.

Once a sufficient quantity of continuous fibre reinforcement has been applied to the mandrel 404 and former 402 (e.g. when the former 402 is fully encapsulated), the hub and flange-forming portions 406, 408 are then cured. During and/or after the curing process an axial compressive consolidation force 410 may be applied to the flange-forming portion 408, to consolidate the composite material in the flange-forming portion 408 and eliminate any voids that may have formed during the winding process.

The cured tubular structure 405 is then extracted from the mandrel 404, and split along a central plane P, which runs through the flange-forming portion 408 perpendicularly to the central axis C. This divides the cured tubular structure 405 into two composite connectors, each comprising one hub portion 406 and a flange portion made up of one half of the flange-forming portion 408. The sacrificial former 402, which is no longer enclosed by the continuous fibre reinforcement, can be removed.

Each connector may then undergo one or more machining steps, for example to remove excess material and/or to form additional features as required.

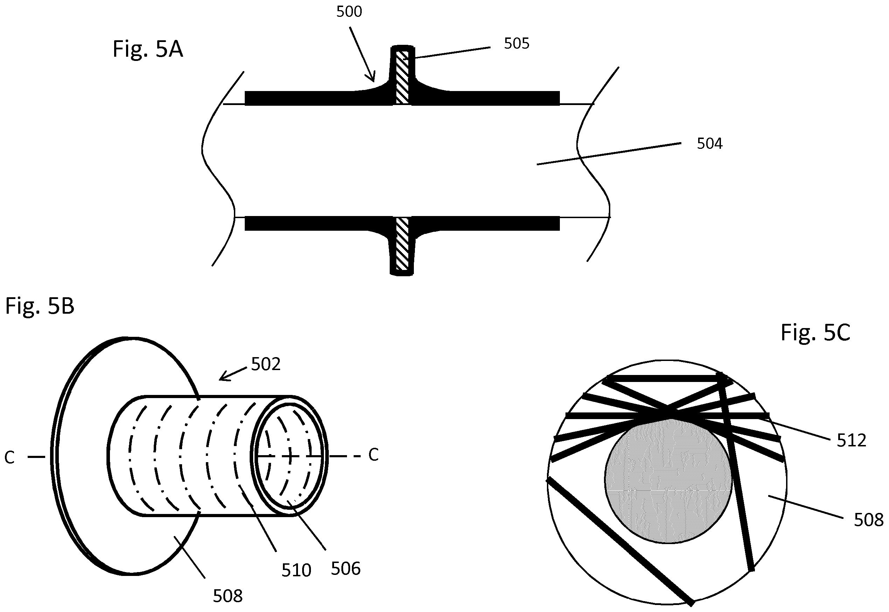

Figures 5A-C provide an overview example of how continuous fibre reinforcement (e.g. in the form of wet impregnated or pre-preg fibre tow) is used to create a connector comprising a hub portion and a flange portion.

As shown in Figure 5A, to help reduce the risk of 'bridging' between the hoop (circumferentially-oriented) layers of continuous fibre reinforcement in the hub portion and the continuous fibre reinforcement extending at an angle of up to 90° to the central axis in the flange portion, additional hoop (circumferentially-oriented) layers of continuous fibre reinforcement may be applied in a transition portion 500 to provide a ramped surface to turn the low angle fibre around from the mandrel 504 to the former 505.

Fig. 5B shows an example of a connector 502 comprising a flange portion 508 and a hub portion 506. Predominantly hoop wound (circumferentially-oriented) continuous fibre reinforcement 510 can be seen in the hub portion 506, which increases the ability of the hub portion 506 to withstand radial forces. Although not shown in Figure 5B, helical layers of continuous fibre reinforcement may also be present in the hub portion 506, e.g. to increase resistance to axial forces in service.

Fig. 5C provides an overview example of how continuous fibre reinforcement 512 may be placed in the flange portion 508 to achieve required part strength requirements. Winding equipment could be programmed to produce any number of arrangements to achieve the desired strength properties. The wind angles over the surface of the former may vary to account for torsional and axial loads in operation. Known multi-axis winding control allows for continuous fibre reinforcement to be wound at a variety of angles and positions to achieve this.

## Claims

1. A method of manufacturing a composite connector (2, 102, 309, 502) for a fluid transfer conduit, the method comprising:
providing a tubular mandrel (304, 404, 504) which extends substantially parallel to a central axis (C);
providing a former (302, 402, 505) on the tubular mandrel (304, 404, 504) which extends substantially perpendicular to the central axis (C);
winding continuous fibre reinforcement (110, 210, 512), impregnated with a thermosetting polymer, around the mandrel (304, 404, 504) to form a tubular hub portion (6, 106, 206, 306, 406, 506) which extends substantially parallel to the central axis (C) and over the former (302, 402, 505) to form a flange portion (8, 108, 208, 308, 408, 508) which extends from the hub portion (6, 106, 206, 306, 406, 506) at an angle to the central axis (C); and
removing the tubular mandrel (304, 404, 54);
wherein winding the continuous fibre reinforcement (110, 210, 512) over the former (302, 402, 505) comprises passing the continuous fibre reinforcement (110, 210, 512) across a first surface of the former (302, 402, 505) that is substantially perpendicular to the central axis (C) and across a second surface of the former (302, 402, 505) such that the former (302, 402, 505) is encapsulated as a core for the flange portion (8, 108, 208, 308, 408, 508).

2. The method of claim 1, wherein passing the continuous fibre reinforcement (110, 210, 512) across the first surface of the former (302, 402, 505) comprises passing across the first surface in a radial direction to pass over an edge of the first surface before passing across the second surface.

3. The method of claim 1 or 2, wherein passing the continuous fibre reinforcement (110, 210, 512) across the first surface of the former (302, 402, 505) comprises passing across the first surface in a circumferential direction.

4. The method of any preceding claim, wherein passing the continuous fibre reinforcement (110, 210, 512) across the first surface of the former (302, 402, 505) comprises passing across the first surface in multiple orientations.

5. The method of any preceding claim, further comprising: applying a consolidation force to the flange portion (8, 108, 208, 308, 408, 508) in a direction substantially parallel to the central axis (C).

6. The method of any preceding claim, comprising leaving the former (302, 402, 505) encapsulated as a core for the flange portion (8, 108, 208, 308, 408, 508).

7. The method of any of claims 1-5, further comprising removing the former (302, 402, 505).

8. A composite connector (2, 102, 309, 502) for a fluid transfer conduit (4), comprising:
a hub portion (6, 106, 206, 306, 406, 506) comprising a tube which extends substantially parallel to a central axis (C); and
a flange portion (8, 108, 208, 308, 408, 508) which extends from the hub portion (6, 106, 206, 306, 406, 506) substantially perpendicular to the central axis (C) of the hub portion (6, 106, 206, 306, 406, 506);
wherein the hub portion (6, 106, 206, 306, 406, 506) comprises a thermosetting polymer reinforced with continuous circumferentially-oriented fibre reinforcement (110, 210, 512); and
wherein the flange portion (8, 108, 208, 308, 408, 508) comprises at least one fixing point (10, 114, 214) and a core (302, 402, 505) that is encapsulated by the same thermosetting polymer reinforced with the continuous fibre reinforcement (110, 210, 512).

9. The composite connector (2, 102, 309, 502) of claim 8, wherein the continuous fibre reinforcement (110, 210, 512) in the flange portion (8, 108, 208, 308, 408, 508) extends in a radial direction to reach an outer circumferential edge of the flange portion (8, 108, 208, 308, 408, 508).

10. The composite connector (2, 102, 309, 502) of claim 8 or 9, wherein the continuous fibre reinforcement (110, 210, 512) runs continuously from the hub portion (6, 106, 206, 306, 406, 506) into the flange portion (8, 108, 208, 308, 408, 508).

11. The composite connector (2, 102, 309, 502) of any of claims 8-10, comprising a transition portion that extends between the hub portion (6, 106, 206, 306, 406, 506) and the flange portion (8, 108, 208, 308, 408, 508) at an increasing angle θ to the central axis (C), wherein 0 < θ < 90° to the central axis.

12. The composite connector (2, 102, 309, 502) of any of claims 8-11, wherein the continuous fibre reinforcement (110, 210, 512) is arranged to divert around the fixing point(s) (10, 114, 214).

13. The composite connector (2, 102, 309, 502) of any of claims 8-12, wherein the continuous circumferentially-oriented fibre reinforcement (110, 210, 512) in the hub portion (6, 106, 206, 306, 406, 506) extends at an angle of more than 80° to the central axis (C).

14. A connection system comprising the composite connector (2, 102, 309, 502) of any of claims 8-13 and a fibre-reinforced polymer fluid transfer conduit (4) connected to the hub portion (6, 106, 206, 306, 406, 506), wherein the composition and orientation of the continuous circumferentially-oriented fibre reinforcement (110, 210, 512) at least within the hub portion (6, 106, 206, 306, 406, 506) is selected such that the coefficient of thermal expansion and/or stiffness of the hub portion (6, 106, 206, 306, 406, 506) substantially matches that of the fluid transfer conduit (4).

15. The connection system of claim 14, further comprising an elastomeric O-ring (14) positioned between an outer surface of the fluid transfer conduit (4) and an inner surface of the hub portion (6, 106, 206, 306, 406, 506), and optionally the elastomeric O-ring (14) being seated between a pair of retaining ridges (16) that allow for axial movement between the fluid transfer conduit (4) and the hub portion (6, 106, 206, 306, 406, 506).

## Patentansprüche

1. Verfahren zur Herstellung eines Verbundverbinders (2, 102, 309, 502) für eine Fluidübertragungsleitung, wobei das Verfahren umfasst:
Bereitstellen eines rohrförmigen Dorns (304, 404, 504), der sich im Wesentlichen parallel zu einer Mittelachse (C) erstreckt;
Bereitstellen eines Formers (302, 402, 505) auf dem rohrförmigen Dorn (304, 404, 504), der sich im Wesentlichen senkrecht zu der Mittelachse (C) erstreckt;
Wickeln einer kontinuierlichen Faserverstärkung (110, 210, 512), die mit einem wärmehärtenden Polymer imprägniert ist, um den Dorn (304, 404, 504), um einen rohrförmigen Nabenabschnitt (6, 106, 206, 306, 406, 506) zu bilden, der sich im Wesentlichen parallel zu der Mittelachse (C) und über den Former (302, 402, 505) erstreckt, um einen Flanschabschnitt (8, 108, 208, 308, 408, 508) zu bilden, der sich von dem Nabenabschnitt (6, 106, 206, 306, 406, 506) in einem Winkel zu der Mittelachse (C) erstreckt; und
Entfernen des rohrförmigen Dorns (304, 404, 54);
wobei das Wickeln der kontinuierlichen Faserverstärkung (110, 210, 512) über den Former (302, 402, 505) Führen der kontinuierlichen Faserverstärkung (110, 210, 512) über eine erste Oberfläche des Formers (302, 402, 505), die im Wesentlichen senkrecht zu der Mittelachse (C) ist, und über eine zweite Oberfläche des Formers (302, 402, 505) umfasst, sodass der Former (302, 402, 505) als ein Kern für den Flanschabschnitt (8, 108, 208, 308, 408, 508) eingekapselt wird.

2. Verfahren nach Anspruch 1, wobei das Führen der kontinuierlichen Faserverstärkung (110, 210, 512) über die erste Oberfläche des Formers (302, 402, 505) Führen über die erste Oberfläche in einer radialen Richtung umfasst, um über eine Kante der ersten Oberfläche zu führen, bevor sie über die zweite Oberfläche geführt wird.

3. Verfahren nach Anspruch 1 oder 2, wobei das Führen der kontinuierlichen Faserverstärkung (110, 210, 512) über die erste Oberfläche des Formers (302, 402, 505) Führen über die erste Oberfläche in einer Umfangsrichtung umfasst.

4. Verfahren nach einem der vorhergehenden Ansprüche, wobei das Führen der kontinuierlichen Faserverstärkung (110, 210, 512) über die erste Oberfläche des Formers (302, 402, 505) Führen über die erste Oberfläche in mehreren Ausrichtungen umfasst.

5. Verfahren nach einem der vorhergehenden Ansprüche, ferner umfassend: Aufbringen einer Verfestigungskraft auf den Flanschabschnitt (8, 108, 208, 308, 408, 508) in einer Richtung, die im Wesentlichen parallel zu der Mittelachse (C) verläuft.

6. Verfahren nach einem der vorhergehenden Ansprüche, umfassend Belassen des Formers (302, 402, 505) eingekapselt als Kern für den Flanschabschnitt (8, 108, 208, 308, 408, 508).

7. Verfahren nach einem der Ansprüche 1-5, ferner umfassend Entfernen des Formers (302, 402, 505).

8. Verbundverbinder (2, 102, 309, 502) für eine Fluidübertragungsleitung (4), umfassend:
einen Nabenabschnitt (6, 106, 206, 306, 406, 506), der ein Rohr umfasst, das sich im Wesentlichen parallel zu einer Mittelachse (C) erstreckt; und
einen Flanschabschnitt (8, 108, 208, 308, 408, 508), der sich von dem Nabenabschnitt (6, 106, 206, 306, 406, 506) im Wesentlichen senkrecht zu der Mittelachse (C) des Nabenabschnitts (6, 106, 206, 306, 406, 506) erstreckt;
wobei der Nabenabschnitt (6, 106, 206, 306, 406, 506) ein duroplastisches Polymer umfasst, das mit einer kontinuierlichen, in Umfangsrichtung ausgerichteten Faserverstärkung (110, 210, 512) verstärkt ist; und
wobei der Flanscheabschnitt (8, 108, 208, 308, 408, 508) mindestens einen Befestigungspunkt (10, 114, 214) und einen Kern (302, 402, 505) umfasst, der durch dasselbe duroplastische Polymer, das mit der kontinuierlichen Faserverstärkung (110, 210, 512) verstärkt ist, eingekapselt ist.

9. Verbundverbinder (2, 102, 309, 502) nach Anspruch 8, wobei sich die kontinuierliche Faserverstärkung (110, 210, 512) in dem Flanschabschnitt (8, 108, 208, 308, 408, 508) in einer radialen Richtung erstreckt, um einen äußeren Umfangsrand des Flanschabschnitts (8, 108, 208, 308, 408, 508) zu erreichen.

10. Verbundverbinder (2, 102, 309, 502) nach Anspruch 8 oder 9, wobei die kontinuierliche Faserverstärkung (110, 210, 512) kontinuierlich von dem Nabenabschnitt (6, 106, 206, 306, 406, 506) in den Flanschabschnitt (8, 108, 208, 308, 408, 508) verläuft.

11. Verbundverbinder (2, 102, 309, 502) nach einem der Ansprüche 8-10, umfassend einen Übergangsabschnitt, der sich zwischen dem Nabenabschnitt (6, 106, 206, 306, 406, 506) und dem Flanschabschnitt (8, 108, 208, 308, 408, 508) in einem zunehmenden Winkel θ zu der Mittelachse (C) erstreckt, wobei 0 < θ < 90° zu der Mittelachse.

12. Verbundverbinder (2, 102, 309, 502) nach einem der Ansprüche 8-11, wobei die kontinuierliche Faserverstärkung (110, 210, 512) so angeordnet ist, dass sie um den/die Befestigungspunkt(e) (10, 114, 214) herumführt.

13. Verbundverbinder (2, 102, 309, 502) nach einem der Ansprüche 8-12, wobei sich die kontinuierliche, in Umfangsrichtung ausgerichtete Faserverstärkung (110, 210, 512) in dem Nabenabschnitt (6, 106, 206, 306, 406, 506) in einem Winkel von mehr als 80° zu der Mittelachse (C) erstreckt.

14. Verbindungssystem, umfassend den Verbundverbinder (2, 102, 309, 502) nach einem der Ansprüche 8-13 und eine faserverstärkte Polymer-Fluidübertragungsleitung (4), die mit dem Nabenabschnitt (6, 106, 206, 306, 406, 506) verbunden ist, wobei die Zusammensetzung und Ausrichtung der kontinuierlichen, in Umfangsrichtung ausgerichteten Faserverstärkung (110, 210, 512) mindestens innerhalb des Nabenabschnitts (6, 106, 206, 306, 406, 506) so gewählt ist, dass der Wärmeausdehnungskoeffizient und/oder die Steifigkeit des Nabenabschnitts (6, 106, 206, 306, 406, 506) im Wesentlichen mit dem/der der Fluidübertragungsleitung (4) übereinstimmt.

15. Verbindungssystem nach Anspruch 14, ferner umfassend einen elastomeren O-Ring (14), der zwischen einer Außenoberfläche der Fluidübertragungsleitung (4) und einer Innenoberfläche des Nabenabschnitts (6, 106, 206, 306, 406, 506) angeordnet ist, und wobei der elastomere O-Ring (14) optional zwischen einem Paar von Halterippen (16) sitzt, das eine axiale Bewegung zwischen der Fluidübertragungsleitung (4) und dem Nabenabschnitt (6, 106, 206, 306, 406, 506) ermöglicht.

## Revendications

1. Procédé de fabrication d'un connecteur composite (2, 102, 309, 502) pour une conduite de transfert de fluide, le procédé comprenant :
la fourniture d'un mandrin tubulaire (304, 404, 504) qui s'étend sensiblement parallèlement à un axe central (C) ;
le fait de prévoir un gabarit (302, 402, 505) sur le mandrin tubulaire (304, 404, 504) qui s'étend sensiblement perpendiculairement à l'axe central (C) ;
l'enroulement d'un renfort en fibres continues (110, 210, 512), imprégné d'un polymère thermodurcissable, autour du mandrin (304, 404, 504) pour former une partie de moyeu tubulaire (6, 106, 206, 306, 406, 506) qui s'étend sensiblement parallèlement à l'axe central (C) et sur le gabarit (302, 402, 505) pour former une partie de bride (8, 108, 208, 308, 408, 508) qui s'étend depuis la partie de moyeu (6, 106, 206, 306, 406, 506) à un angle par rapport à l'axe central (C) ; et
le retrait du mandrin tubulaire (304, 404, 54) ;
dans lequel l'enroulement du renfort en fibres continues (110, 210, 512) sur le gabarit (302, 402, 505) comprend le passage du renfort en fibres continues (110, 210, 512) à travers une première surface du gabarit (302, 402, 505) qui est sensiblement perpendiculaire à l'axe central (C) et à travers une seconde surface du gabarit (302, 402, 505) de sorte que le gabarit (302, 402, 505) soit encapsulé en tant que noyau pour la partie de bride (8, 108, 208, 308, 408, 508).

2. Procédé selon la revendication 1, dans lequel le passage du renfort en fibres continues (110, 210, 512) à travers la première surface du gabarit (302, 402, 505) comprend le passage à travers la première surface dans une direction radiale pour passer sur un bord de la première surface avant de passer à travers la seconde surface.

3. Procédé selon la revendication 1 ou 2, dans lequel le passage du renfort en fibres continues (110, 210, 512) à travers la première surface du gabarit (302, 402, 505) comprend le passage à travers la première surface dans une direction circonférentielle.

4. Procédé selon une quelconque revendication précédente, dans lequel le passage du renfort en fibres continues (110, 210, 512) à travers la première surface du gabarit (302, 402, 505) comprend le passage à travers la première surface dans de multiples orientations.

5. Procédé selon une quelconque revendication précédente, comprenant en outre : l'application d'une force de consolidation à la partie de bride (8, 108, 208, 308, 408, 508) dans une direction sensiblement parallèle à l'axe central (C).

6. Procédé selon une quelconque revendication précédente, comprenant le fait de laisser le gabarit (302, 402, 505) encapsulé en tant que noyau pour la partie de bride (8, 108, 208, 308, 408, 508).

7. Procédé selon l'une quelconque des revendications 1 à 5, comprenant en outre le retrait du gabarit (302, 402, 505).

8. Connecteur composite (2, 102, 309, 502) pour une conduite de transfert de fluide (4) comprenant :
une partie de moyeu (6, 106, 206, 306, 406, 506) comprenant un tube qui s'étend sensiblement parallèlement à un axe central (C) ; et
une partie de bride (8, 108, 208, 308, 408, 508) qui s'étend depuis la partie de moyeu (6, 106, 206, 306, 406, 506) sensiblement perpendiculairement à l'axe central (C) de la partie de moyeu (6, 106, 206, 306, 406, 506) ;
dans lequel la partie de moyeu (6, 106, 206, 306, 406, 506) comprend un polymère thermodurcissable renforcé avec un renfort en fibres continues orienté circonférentiellement (110, 210, 512) ; et
dans lequel la partie de bride (8, 108, 208, 308, 408, 508) comprend au moins un point de fixation (10, 114, 214) et un noyau (302, 402, 505) qui est encapsulé par le même polymère thermodurcissable renforcé avec le renfort en fibres continues (110, 210, 512).

9. Connecteur composite (2, 102, 309, 502) selon la revendication 8, dans lequel le renfort en fibres continues (110, 210, 512) dans la partie de bride (8, 108, 208, 308, 408, 508) s'étend dans une direction radiale pour atteindre un bord circonférentiel externe de la partie de bride (8, 108, 208, 308, 408, 508).

10. Connecteur composite (2, 102, 309, 502) selon la revendication 8 ou 9, dans lequel le renfort en fibres continues (110, 210, 512) s'étend en continu depuis la partie de moyeu (6, 106, 206, 306, 406, 506) dans la partie de bride (8, 108, 208, 308, 408, 508).

11. Connecteur composite (2, 102, 309, 502) selon l'une quelconque des revendications 8 à 10, comprenant une partie de transition qui s'étend entre la partie de moyeu (6, 106, 206, 306, 406, 506) et la partie de bride (8, 108, 208, 308, 408, 508) à un angle croissant θ par rapport à l'axe central (C), où 0 < θ < 90° par rapport à l'axe central.

12. Connecteur composite (2, 102, 309, 502) selon l'une quelconque des revendications 8 à 11, dans lequel le renfort en fibres continues (110, 210, 512) est agencé de manière à contourner le ou les points de fixation (10, 114, 214).

13. Connecteur composite (2, 102, 309, 502) selon l'une quelconque des revendications 8 à 12, dans lequel le renfort en fibres continues orienté circonférentiellement (110, 210, 512) dans la partie de moyeu (6, 106, 206, 306, 406, 506) s'étend à un angle supérieur à 80° par rapport à l'axe central (C).

14. Système de connexion comprenant le connecteur composite (2, 102, 309, 502) selon l'une quelconque des revendications 8 à 13 et une conduite de transfert de fluide en polymère renforcé de fibres (4) connectée à la partie de moyeu (6, 106, 206, 306, 406, 506), dans lequel la composition et l'orientation du renfort en fibres continues orienté circonférentiellement (110, 210, 512) au moins à l'intérieur de la partie de moyeu (6, 106, 206, 306, 406, 506) sont choisies de sorte que le coefficient de dilatation thermique et/ou de rigidité de la partie de moyeu (6, 106, 206, 306, 406, 506) corresponde sensiblement à celui de la conduite de transfert de fluide (4).

15. Système de connexion selon la revendication 14, comprenant en outre un joint torique en élastomère (14) positionné entre une surface externe de la conduite de transfert de fluide (4) et une surface interne de la partie de moyeu (6, 106, 206, 306, 406, 506), et éventuellement le joint torique en élastomère (14) étant logé entre une paire de nervures de retenue (16) qui permettent un mouvement axial entre la conduite de transfert de fluide (4) et la partie de moyeu (6, 106, 206, 306, 406, 506).
